# EUROPÄISCHE PATENTSCHRIFT

(11) **EP 3 703 971 B1**
(45) Veröffentlichungstag und Bekanntmachung des Hinweises auf die Patenterteilung: **20.12.2023**
(21) Anmeldenummer: 19700035.9
(22) Anmeldetag: 02.01.2019
(51) Int. Cl.: B60M 1/24, B60M 1/12

(54) **OBERLEITUNGSANORDNUNG UND VERFAHREN ZUR MONTAGE EINER OBERLEITUNGSANORDNUNG**
OVERHEAD LINE ARRANGEMENT AND METHOD FOR MOUNTING AN OVERHEAD LINE ARRANGEMENT
ENSEMBLE LIGNE AÉRIENNE ET PROCÉDÉ DE MONTAGE D'UN ENSEMBLE LIGNE AÉRIENNE

(30) Priorität: 30.01.2018 DE 102018201362
(43) Veröffentlichungstag der Anmeldung: 09.09.2020
(73) Patentinhaber: Siemens Mobility GmbH, 81739 München (DE)
(72) Erfinder: GIEBEL, Sascha, 91058 Erlangen (DE); TERFLOTH, Sebastian, 91080 Uttenreuth (DE); HAHN, Gunter, 91353 Hausen (DE); MOLTHAN, Helge, 83075 Bad Feilnbach (DE)
(74) Vertreter: Siemens Patent Attorneys
(86) Internationale Anmeldenummer: PCT/EP2019/050018
(87) Internationale Veröffentlichungsnummer: WO 2019/149457

(56) Entgegenhaltungen:
- WO-A1-02/102617
- DE-A1-102010 051 379
- DE-B- 1 173 509
- DE-C- 390 196
- DE-C- 732 808
- US-A- 3 985 211
- Afl: "Clamp, Contact wire strain", , 24. Oktober 1996 (1996-10-24), XP055573802, Gefunden im Internet: URL:https://www.aflglobal.com/productlist/ Product-Lines/Conductor-Accessories/Clamp, -Contact-Wire-Strain/doc/CWSC34T_Dead_End_ Clamps.aspx [gefunden am 2019-03-25]

## Beschreibung

Die Erfindung betrifft, eine Oberleitungsanordnung gemäß Anspruch 1 und ein Verfahren zur Montage einer Oberleitungsanordnung gemäß Anspruch 11.

Elektrisch betriebene Fahrzeuge, die während der Fahrt mit Strom versorgt werden, wie beispielsweise Bahnen, Straßenbahnen, U-Bahnen, elektrisch betriebene LKW (E-Highway) und O-Busse beziehen den Strom über einen schleifenden Kontakt aus einem Energieversorgungsnetz. Das Energieversorgungsnetz umfasst beispielsweise eine Oberleitung mit einem Fahrdraht, eine Stromschiene oder dritte Schiene, an dem ein Stromabnehmer des Fahrzeugs während der Fahrt mit seiner Schleifleiste entlangschleift. Weit verbreitet sind Oberleitungsanlagen mit einem oberhalb des Fahrzeugs angeordneten Fahrdraht, der von dem Stromabnehmer des Fahrzeugs während der Fahrt beschliffen wird. Solche Oberleitungen werden beispielsweise für elektrische Bahnen, Straßenbahnen und auch elektrisch betriebene LKW (E-Highway) eingesetzt.

Bei bekannten Oberleitungsanlagen wird der Fahrdraht von einer Schleifleiste des Stromabnehmers von seiner Unterseite kontaktiert. Um eine gleichmäßige Abnutzung der Schleifleiste im Betrieb zu gewährleisten, ist ein zickzackförmiger Verlauf des Fahrdrahtes beispielsweise bei spurgebundenen Fahrzeugen, wie Straßenbahnen oder Fernbahnen üblich. Dabei wird eine zulässige Lage des Fahrdrahtes zu der Schleifleiste festgelegt, um einen Kontakt des Fahrdrahtes mit den Randbereichen der Schleifleiste zu verhindern. Diese Randbereiche der Schleifleiste des Stromabnehmers sind als sogenannte Hörner ausgebildet, an denen die Schleifleiste nicht waagerecht, sondern nach unten geneigt verläuft.

Aus der DE_390196_C ist eine Vielfachaufhängung eines Fahrdrahtes unter Bauwerken geringer Höhe mittels geneigter Hängedrähte an einem schräg darüber liegendem Tragdraht bekannt, wobei Klemmen verwendet werden, bei welchen eine Fahrdraht-und eine Tragdrahtklemme zu einem Stück vereinigt sind.

Aus der US 3,985,211 A ist unter anderem eine zweiteilige Stromschiene für ein Oberleitungssystem für Schienenfahrzeuge bekannt, mittels derer der Fahrdraht einklemmbar ist.

Aus der DE_1173509_B ist ein Streckentrenner von elektrischen Liniennetzen bekannt, der derart ausgeführt ist, dass ein Stromabnehmer mit hoher Geschwindigkeit vorbeistreichen kann.

Aus der DE_102010051379_A1 ist ein Streckentrenner mit einem mechanisch geschlossenem System bekannt, welches sicherstellt, dass ein Stromabnehmer eines vorbeifahrenden Fahrzeuges stets in elektrischem Kontakt mit einer spannungsführenden Kufe steht.

Insbesondere bei nicht schienengebundenen Systemen, wie beispielsweise elektrisch betriebenen LKW (E-Highway), kann es durch seitliche Relativbewegungen der Fahrzeuge zu der Oberleitung bzw. bei schienengebundenen Systemen insbesondere in Bereichen von ein- und auslaufenden Fahrdrähten (z.B. Weichenbereiche) zum Kontakt des Fahrdrahts mit dem seitlichen Randbereich kommen. In diesem Randbereich, also an den Hörnern wird der Fahrdraht nicht mehr ausschließlich von unten, sondern aufgrund der Neigung der Hörner auch von der Seite beschliffen. Ein solches zumindest teilweises seitliches Beschleifen des Fahrdrahtes kann dort problematisch werden, wo Klemmen am Fahrdraht angebracht sind. Die Klemmen sind über die sogenannten Klemmrillen des Fahrdrahtes an diesem befestigt und können eine Vielzahl von Funktionen aufweisen, wie beispielsweise zum Einstellen der Seiten- und Höhenlage des Fahrdrahts oder zur Stromeinspeisung. Die Klemmen sind üblicherweise breiter als der Fahrdraht an seiner dicksten Stelle. Aufgrund dieses Überstandes der Klemmen kann es zur Kollision zwischen den Stromabnehmer und den Klemmen kommen, wenn die Neigung des Stromabnehmers gegenüber der Horizontalen zu groß ist. An den Hörnern der Schleifleiste kann die Neigung gegenüber der Horizontalen zu groß sein, das heißt größer als die Neigung zwischen einer Tangente an die Fahrdrahtaußenkante und dem über den Fahrdraht hinausstehenden Teil der Klemme. Zwar gewähren auch die bekannten Fahrleitungsklemmen einen Freiraum von zum Beispiel fünfzehn Grad gegenüber der Horizontalen, um eine geringe Neigung der Schleifleiste zuzulassen. Bei einer größeren Neigung gegenüber der Horizontalen kann es aber zu Kollisionen zwischen der Wippe des Stromabnehmers und einer Klemme kommen. Bei üblichen Beschleifungsgeschwindigkeiten bis zu 100 km/h oder größer, wie sie zum Beispiel bei E-Highway vorkommen, kann dies zu verheerenden Beschädigungen an der Oberleitungsanlage und dem Fahrzeug führen.

Der Erfindung liegt die Aufgabe zugrunde, die oben genannte Problematik zu vermeiden oder zu lösen.

Erfindungsgemäß wird die Aufgabe durch eine Oberleitungsanordnung mit den Merkmalen des unabhängigen Anspruchs 1 gelöst.

Weiterhin wird die Aufgabe durch ein erfindungsgemäßes Verfahren zur Montage einer Oberleitungsanlage mit den Merkmalen des unabhängigen Anspruchs 11 gelöst, bei dem wenigstens eine Klemme an einem Fahrdraht befestigt wird und eine Schutzeinrichtung zum Schutz der Klemme und eines seitlich am Fahrrad entlangschleifenden Stromabnehmers angeordnet wird, durch die der Stromabnehmer abgelenkt wird.

Die erfindungsgemäße Lösung hat den Vorteil, dass durch die Schutzeinrichtung ein Kontakt zwischen dem Stromabnehmer und der Klemme verhindert wird und so Beschädigungen an dem Stromabnehmer, der Klemme, dem Fahrzeug oder der Oberleitungsanlage vermieden werden. Wenn es zu einem seitlichen Schleifen des Stromabnehmers am Fahrdraht im Bereich der Klemme kommt, ist dies durch die Schutzeinrichtung unproblematisch. Der Stromabnehmer wird durch die wenigstens eine Ablenkeinrichtung so abgelenkt, dass es zu keinem Kontakt mit der Klemme kommt. Die erfindungsgemäße Lösung ist konstruktiv besonders einfach und kann sowohl beim Bau von neuen Oberleitungsanlagen eingesetzt als auch in bestehende Anlagen nachgerüstet werden. Durch die erfindungsgemäße Lösung können bekannte Klemmen weiter eingesetzt werden. Dies gilt auch beim Neubau von Oberleitungsanlagen, bei denen eine größere Neigung der Schleifleiste zur Horizontalen als bisher zulässig, nötig oder vorteilhaft ist. Dadurch kann eine Überarbeitung und Neuzulassung von bestehenden Klemmen und möglicherweise auch anderen Komponenten der Oberleitungsanlage vermieden werden.

Durch die erfindungsgemäße Oberleitungseinrichtung, mit der wenigstens einen Schutzeinrichtung können verschiedenste am Fahrdraht befestige Klemmen geschützt werden, wie beispielsweise Fahrdrahtseitenhalterklemmen, Hängerklemmen, Stromklemmen, Festpunktklemmen oder Fahrdrahtstoßklemmen.

Die erfindungsgemäße Lösung kann durch vorteilhafte Ausgestaltungen weiterentwickelt werden, wie sie im Folgenden beschrieben sind.

Erfindungsgemäß umhüllt die Ablenkeinrichtung wenigstens einen Schutzbereich zumindest teilweise, in dem die Klemme anordenbar ist. Dies hat den Vorteil, dass ein sicheres Ablenken des Stromabnehmers um die gesamte Klemme gewährleistet werden kann und eine hohe Sicherheit gegeben ist.

Um eine Montage der Schutzeinrichtung besonders einfach zu gestalten, weist die Ablenkeinrichtung erfindungsgemäß einen, den Schutzbereich ausbildenden Hohlraum zur Aufnahme der Klemme auf. Dadurch kann die Ablenkeinrichtung besonders einfach auf die Klemme beziehungsweise um die Klemme herum aufgesetzt werden. Um größere Lücken zwischen der Klemme und der Ablenkeinrichtung zu vermeiden kann die Kontur des Hohlraums im Wesentlichen der Außenkontur der Klemme folgen. So kann ein guter Sitz der Ablenkeinrichtung auf der Klemme gewährleistet werden und die Ablenkeinrichtung stützt sich besonders gut an der Klemme ab, wenn der seitlich am Fahrdraht schleifende Stromabnehmer auf die Ablenkeinrichtung trifft und von dieser ausgelenkt wird. So wird eine von dem Stromabnehmer auf die Ablenkeinrichtung übertragene Kraftkomponente an die Klemme und von dieser an den Fahrdraht übertragen. Die Ablenkeinrichtung kann beispielsweise aus einem leichten, strapazierfähigen Material wie beispielsweise einem Kunststoffmaterial hergestellt werden. Dies kann vorteilhafterweise auch durch 3D-Druck geschehen, bei dem beispielsweise Negativabdrücke der zu schützenden Klemme für die Ausbildung des Hohlraums benutzt werden können. Der Hohlraum kann somit komplementär zur äußeren Form der Klemme ausgebildet sein.

Die erfindungsgemäße Lösung kann durch vorteilhafte Ausgestaltungen weiterentwickelt werden, wie sie im Folgenden beschrieben sind.

In einer vorteilhaften Ausgestaltung kann die Ablenkeinrichtung wenigstens eine im montierten Zustand seitlich des Fahrdrahtes verlaufende Gleitfläche aufweisen, an welcher der Stromabnehmer entlanggleiten kann. Insbesondere kann die Gleitfläche im monierten Zustand und in einem spitzen Winkel zur Längsrichtung des Fahrdrahtes verlaufen. So kann gewährleistet werden, dass die bei einer Kollision des Stromabnehmers mit der Schutzeinrichtung auftretende Querbeschleunigungen möglichst gering gehalten werden. Es wird die Kraftkomponente bei einer Kollision in der Querrichtung gering gehalten.

Um die Schutzeinrichtung konstruktiv einfach und leicht montierbar auszugestalten, kann die Ablenkeinrichtung zwei Schutzkappen aufweisen, die von gegenüberliegenden Seiten auf die Klemme aufsetzbar ausgebildet sind. Ferner kann die Ablenkeinrichtung so ausgebildet sein, dass sie mit der Klemme lösbar verbunden werden kann. Dies ermöglicht eine einfache Montage und Demontage.

In einer besonders vorteilhaften Ausgestaltung der erfindungsgemäßen Schutzeinrichtung kann diese wenigstens eine Befestigungseinrichtung zum Befestigen der Schutzeinrichtung an den Fahrdraht aufweisen. Dies hat den Vorteil, dass die Schutzeinrichtung durch die Befestigungseinrichtung selbst mit dem Fahrdraht verbunden ist und Kräfte bei einer möglichen Kollision des Stromabnehmers mit der Schutzeinrichtung direkt in den Fahrdraht eingeleitet werden können. Dadurch wird eine Belastung der zu schützenden Klemme bei der Kollision vermieden. So kann einer möglichen Überlastung der Klemme oder einer Beschädigung vorgebeugt werden. Durch die Befestigungseinrichtung kann die Schutzeinrichtung mechanisch separat zur Klemme ausgebildet sein. Durch diese Ausgestaltung der erfindungsgemäßen Schutzeinrichtung ist die Klemme noch optimaler geschützt und ein aufwendiger Austausch der Klemme nach einer Kollision des Stromabnehmers mit der Schutzeinrichtung kann in jedem Fall vermieden werden. Die Klemme und die Schutzeinrichtung sind in dieser Ausführungsform funktional voneinander getrennt und nur durch den gemeinsamen Fahrdraht miteinander verbunden. Die zu schützende Klemme hat lediglich ihre ursprüngliche Hauptfunktion zu erfüllen und keine Nebenfunktion, die gegebenenfalls beim Anprall des Stromabnehmers an die Schutzeinrichtung entstehen könnten.

Ferner können die Ablenkeinrichtung und die Befestigungseinrichtung miteinander lösbar verbunden sein, beispielsweise durch Schrauben, Rasten, Riegel oder ähnliches.

Um zu vermeiden, dass im regulären Betrieb ein waagerecht schleifender Stromabnehmer abgelenkt wird, kann die Ablenkeinrichtung derart ausgebildet sein, dass in einem am Fahrdraht montierten Zustand ein Bereich oberhalb der Höhe des Fahrdrahts ausgespart ist. So wird eine unnötige Auslenkung des Stromabnehmers und Störung im regulären Betrieb vermieden.

Um die Klemme vor Belastungen durch den seitlich am Fahrdraht entlangschleifenden Stromabnehmer zu schützen, können die Klemmen und/oder die Schutzeinrichtung so angeordnet sein, dass die Klemme, von der wenigstens einen Ablenkeinrichtung der Schutzeinrichtung zumindest teilweise umhüllt ist.

In einer weiteren vorteilhaften Ausgestaltung der erfindungsgemäßen Oberleitungsanlage kann die Schutzeinrichtung mit wenigstens einer Befestigungseinrichtung am Fahrdraht befestigt sein, sowie die Schutzeinrichtung und die Klemme zueinander mechanisch separat ausgebildet und in Längsrichtung des Fahrdrahts mit einem Abstand zueinander angeordnet sein. Dies hat den oben bereits beschriebenen Vorteil, dass bei einer Kollision des Stromabnehmers mit der Schutzeinrichtung auftretende Kräfte direkt in den Fahrdraht abgeleitet werden und zu keiner Belastung der zu schützenden Klemme führen.

Im Folgenden wird die Erfindung mit Bezug auf die beigefügten Zeichnungen erläutert.

Es zeigen:
- Figur 1: eine schematische Darstellung eines unterhalb am Fahrdraht schleifenden Stromabnehmers mit einer am Fahrdraht befestigten Klemme;
- Figur 2: eine schematische Darstellung eines seitlich an einem Fahrdraht entlangschleifenden Stromabnehmers mit einer am Fahrdraht befestigten Klemme;
- Figur 3: eine schematische Darstellung einer ersten Ausführungsform einer erfindungsgemäßen Schutzeinrichtung in einer Seitenansicht;
- Figur 4: eine schematische Draufsicht der Schutzeinrichtung aus Figur 3;
- Figur 5: eine schematische Darstellung einer weiteren Ausführungsform einer erfindungsgemäßen Schutzeinrichtung in einer Seitenansicht;
- Figur 6: eine schematische Darstellung einer weiteren Seitenansicht zu der Schutzeinrichtung aus Figur 5;
- Figur 7: eine schematische Darstellung einer Draufsicht der Schutzeinrichtung aus Figuren 5 und 6;
- Figur 8: eine schematische Darstellung einer weiteren Ausführungsform einer erfindungsgemäßen Schutzeinrichtung;
- Figur 9: eine schematische Draufsicht der Schutzeinrichtung aus Figur 7.

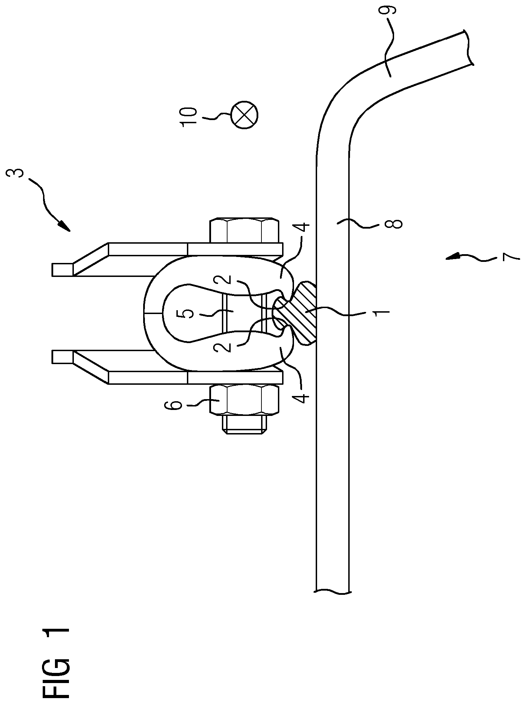

Figur 1 zeigt einen Fahrdraht 1 in einer Schnittdarstellung, der im oberen Teil zwei seitliche Rillen 2 aufweist. Über die Rillen 2 ist eine handelsübliche Klemme 3 an dem Fahrdraht 1 befestigt. Für diese Befestigung werden in die Rillen 2 zwei Klemmbacken 4 über einen Bolzen 5 mit einer Mutter 6 geklemmt. In den bekannten Oberleitungsanlagen, die beispielsweise für Bahnen, Straßenbahnen oder auch elektrisch betriebene LKW (E-Highway) verwendet werden, sind eine Vielzahl von Klemmen 3 am Fahrdraht 1 befestigt.

An seiner Unterseite wird der Fahrdraht 1 in Figur 1 von einem Stromabnehmer 7 eines nicht dargestellten Fahrzeugs beschliffen. Der Stromabnehmer 7, der in an sich bekannter Weise ausgeführt ist, umfasst eine Schleifleiste 8, die den Fahrdraht 1 kontaktiert. Die Schleifleiste 8 weist dabei einen mittleren, näherungsweise horizontal verlaufenden Teil und seitliche Bereiche 9 auf, die auch als Hörner bezeichnet werden und an denen die Schleifleiste 8 gegenüber der Horizontalen nach unten geneigt verläuft.

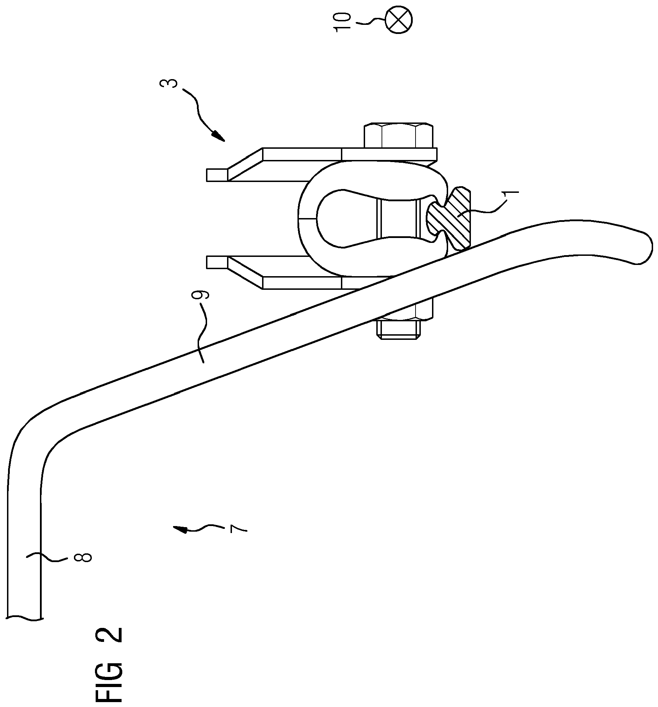

In Figur 2 ist eine Situation im Betrieb der Oberleitungsanlage dargestellt, in der nicht der horizontal verlaufende Bereich der Schleifleiste 8 den Fahrdraht 1 kontaktiert, sondern der geneigt verlaufende seitliche Bereich 9. In Figur 2 schleift der Stromabnehmer 7 somit nicht nur unterhalb am Fahrdraht entlang, sondern zumindest teilweise auch seitlich des Fahrdrahtes 1. Hierdurch kann wie in Figur 2 dargestellt eine Störkontur, also eine Überlappung, mit der Klemme 3 entstehen. Dies kann bei einer Fahrt des Fahrzeugs und des Stromabnehmers 7 in einer Fahrtrichtung 10 zu einer Kollision des Stromabnehmers 7 und der Klemme 3 führen. Eine solche Kollision könnte erheblichen Schaden an dem Stromabnehmer 7, dem Fahrzeug und/oder dem Fahrdraht 1 mit der Klemme 3 verursachen.

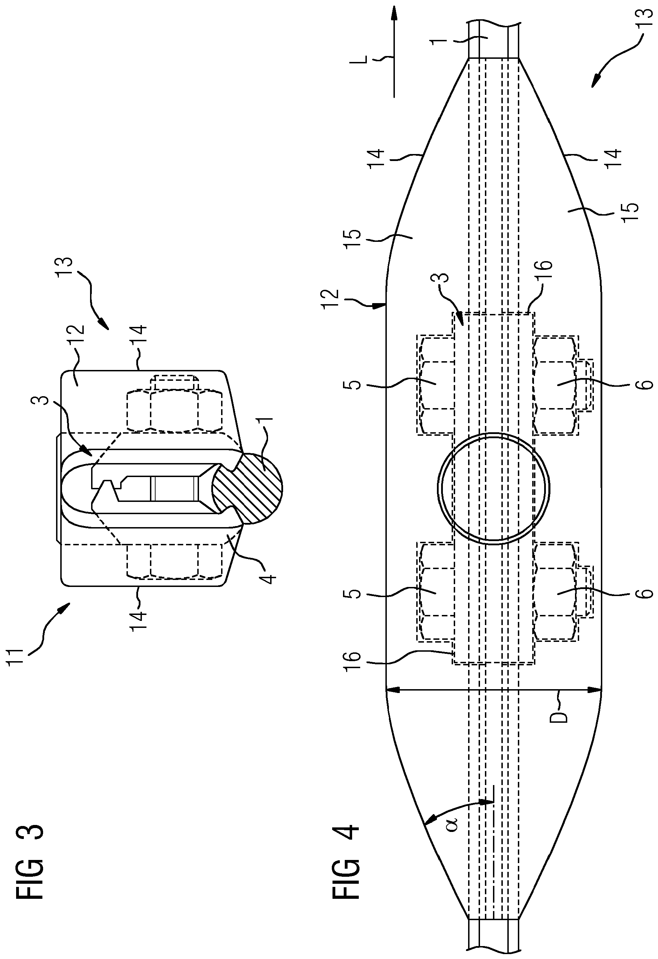

In den Figuren 3 und 4 ist eine erste Ausführungsform einer erfindungsgemäßen Schutzeinrichtung 11 dargestellt, durch die solche Schäden am Fahrdraht 1, der Klemme 3 und/oder dem Stromabnehmer 7 vermieden werden.

Die Schutzeinrichtung 11 in der in den Figuren 3 und 4 dargestellten beispielhaften Ausführungsform ist zum Schutz der an dem Fahrdraht 1 befestigten Klemme 3 und des Stromabnehmers 7 ausgebildet und weist eine Ablenkeinrichtung 12 auf.

Die Ablenkeinrichtung 12 ist zum Ablenken des seitlich am Fahrdraht 1 entlangschleifenden Stromabnehmers 7 ausgebildet. Der Fahrdraht 1, die am Fahrdraht 1 befestigte Klemme 3 und die erfindungsgemäße Schutzeinrichtung 11 bilden zusammen eine erfindungsgemäße Oberleitungsanordnung 13 aus. Bei der beispielhaften Ausführungsform in den Figuren 3 und 4 ist die Klemme 3 beispielhaft als eine Hängerklemme ausgebildet, die ähnlich wie in den Figuren 1 und 2 mit den Klemmbacken 4 und zwei Bolzen 5 in den Rillen 2 des Fahrdrahtes 1 befestigt ist.

Die Ablenkeinrichtung 12 weist Gleitflächen 14 auf, die so geformt sind, dass der in der Fahrtrichtung 10 bewegende Stromabnehmer 7 störungsfrei beziehungsweise störungsarm um die Klemme 3 herumgeführt wird. Dabei sind die Gleitflächen 14 am Anfang und am Ende der Ablenkeinrichtung 12 in einem spitzen Winkel α zur Längsrichtung L des Fahrdrahts 1 angeordnet. Die Breite D der Ablenkeinrichtung 12 nimmt in der Längsrichtung L somit nur langsam zu beziehungsweise hinter der Klemme 3 langsam wieder ab, so dass eine beim Ablenken des Stromabnehmers 7 auftretende Querbeschleunigung auf diesen möglichst gering ist. Die Ablenkeinrichtung 12 weist in der beispielhaften Ausführungsform in den Figuren 3 und 4 zwei Schutzkappen 15 auf, die zur Montage von gegenüberliegenden Seiten auf die Klemme 3 aufgesetzt werden. Im Inneren der Ablenkeinrichtung 12 ist ein Hohlraum ausgebildet, in dem die Klemme 3 im montierten Zustand aufgenommen ist. Die Schutzkappen 15 sind vorzugsweise aus leichtem, strapazierfähigem Material, beispielsweise aus Kunststoff oder Metall, hergestellt. Die Herstellung kann beispielsweise mittels 3D-Druck geschehen, wobei die Hohlräume 16 in jeder der Schutzkappen 15 bei dieser Ausführungsform im Wesentlichen komplementär zu der zu schützenden Klemme 3 ausgebildet sind. Komplementär heißt in diesem Fall, dass die Hohlräume 16 einem Negativ von der zu schützenden Klemme 3 entsprechen. Dies hat den Vorteil, dass ein Spalt zwischen der Ablenkeinrichtung 12 und der Klemme 3 möglichst gering ist und dadurch ein Formschluß zwischen der Ablenkeinrichtung 12 und der zu schützenden Klemme 3 hergestellt werden kann. Durch diesen Formschluß kann die Schutzeinrichtung 11 zum einen um die Klemme 3 herum mit optimalem Sitz befestigt werden und bei der Kollision mit dem Stromabnehmer 7 auftretende Kräfte an die Klemme 3 optimal übertragen werden.

Um das in Figur 1 dargestellte problemlose Beschleifen des Stromabnehmers 7 am Fahrdraht 1 nicht zu behindern, ist die Schutzeinrichtung 11 so ausgebildet, dass ein Bereich unterhalb der Höhe des Fahrdrahts 1 ausgespart ist.

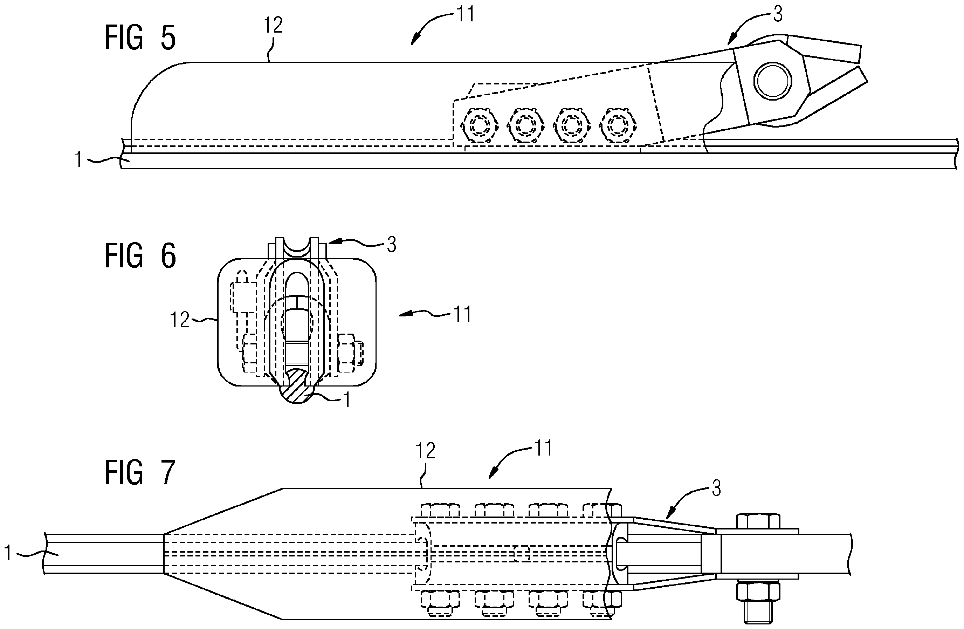

Eine weitere Ausführungsform der erfindungsgemäßen Schutzeinrichtung 11 ist in den Figuren 5 - 7 in unterschiedlichen Ansichten dargestellt. Im Gegensatz der Ausführungsform der Figuren 3 und 4 wird bei der Ausführungsform der Figuren 5 - 7 eine Z-Seil-Klemme durch die Schutzeinrichtung 11 geschützt. Entsprechend sind die Hohlräume 16 in den Schutzkappen 15 der Ablenkeinrichtung 12 in den Figuren 5 - 7 für diese Klemme 3 ausgeformt.

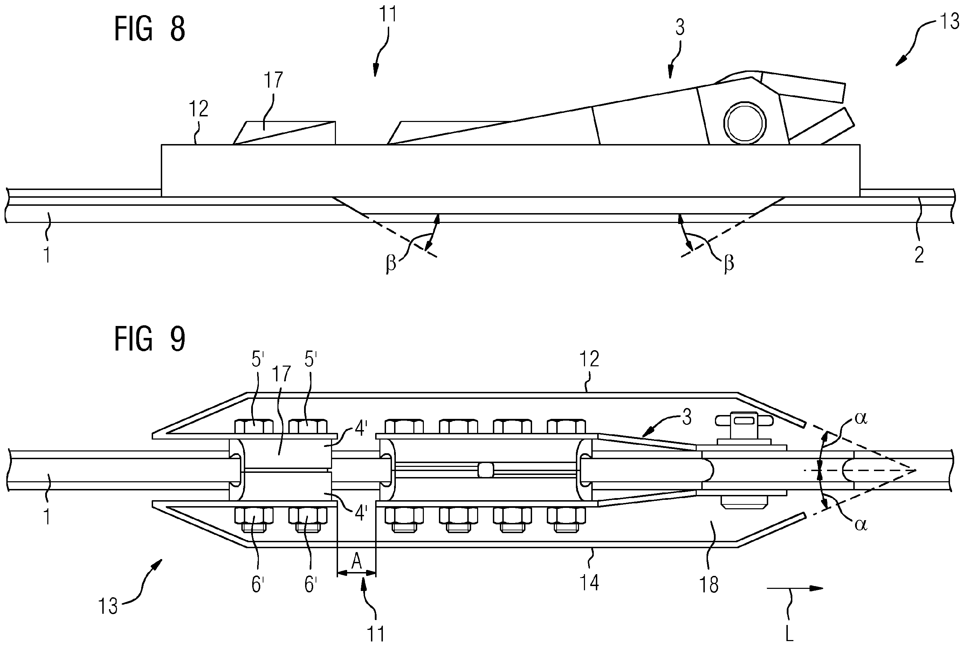

Im Folgenden wird eine weitere Ausführungsform der erfindungsgemäßen Schutzeinrichtung 11 mit Bezug auf die Figuren 8 und 9 beschrieben. Der Kürze halber wird lediglich auf die Unterschiede zu den zuvor beschriebenen Ausführungsformen der Figuren 3 und 4 beziehungsweise 5 - 7 eingegangen.

Die Schutzeinrichtung 11 in den Figuren 8 und 9 weist eine Befestigungseinrichtung 17 auf, durch die die Schutzeinrichtung 11 an dem Fahrdraht 1 direkt befestigt ist. Die Befestigungseinrichtung 17 kann ähnlich wie eine Klemme aufgebaut sein und weist daher hier Klemmbacken 4` und Bolzen 5' mit Muttern 6' auf, mit denen die Befestigungseinrichtung 17 in den Rillen 2 des Fahrdrahts 1 befestigt ist. Die Ablenkeinrichtung 12 der Schutzeinrichtung 11 in der Ausführungsform der Figuren 8 und 9 ist wiederum mit der Befestigungseinrichtung 17 verbunden. Zur lösbaren Verbindung der Ablenkeinrichtung 12 mit der Befestigungseinrichtung 17 werden hier als Befestigungsmittel die Bolzen 5' mit den Muttern 6` genutzt. Separate Befestigungsmittel wären selbstverständlich auch möglich. Die Befestigungseinrichtung der Schutzeinrichtung 11 ist am Fahrdraht 1 mit einem Abstand A zur Klemme 3 in der Längsrichtung L ausgebildet. Dadurch ist die Schutzeinrichtung 11 mechanisch separat zur Klemme 3 ausgestaltet und mit dieser nur über den Fahrdraht 1 verbunden.

Die Ausführungsform in den Figuren 8 und 9 hat den zusätzlichen Vorteil, dass bei einer Kollision mit einem Stromabnehmer 7 auftretende Kräfte von der Schutzeinrichtung 11 über die Befestigungseinrichtung 17 direkt in den Fahrdraht 1 abgegeben werden können. Dadurch wird die zu schützenden Klemme 3 auch bei einer Kollision mit dem Stromabnehmer 7 nicht belastet. Da sich die Ablenkeinrichtung 12 in der Ausführungsform der Figuren 8 und 9 nicht an der Klemme 3 abstützt, kann die Ablenkeinrichtung 12 konstruktiv einfacher, hier zum Beispiel als einfaches Blechteil, ausgebildet sein.

In der Ausführungsform der Figuren 8 und 9 ist die eigentliche Funktion der Klemme 3 nicht verändert und die Klemme 3 durch die mechanisch separat angeordnete Schutzeinrichtung schützend umgeben. Hierbei umhüllt die Ablenkeinrichtung 12 einen Schutzbereich 18. In diesem Schutzbereich 18 ist die Klemme 3 schützend aufgenommen. Selbstverständlich können auch mehrere Klemmen 3 in dem Schutzbereich 18 aufgenommen werden, der auch größer ausgebildet sein kann. Bei der Ausführungsform der Figuren 8 und 9 erfüllt die zu schützende Klemme 3 ihre vorgesehene Hauptfunktion und muss keine Nebenfunktionen im Fall eines Aufpralls eines Stromabnehmers 7 auf die Ablenkeinrichtung 12 übernehmen. Der Aufprall wird komplett durch die Schutzeinrichtung 11 in der Ausführungsform der Figuren 8 und 9 übernommen. Die Schutzeinrichtung 11 ist dabei so ausgestaltet, dass der Kontakt mit dem Stromabnehmer 7 sowohl für die Schutzeinrichtung 11 als auch für den Stromabnehmer 7 ohne Beschädigung erfolgt. Die Ablenkwinkel α und β der Ablenkeinrichtung 12 sind so ausgebildet, dass bei einer gegebenen Geschwindigkeit des Stromabnehmers 7 und der Festigkeiten der kollidierenden Bauteile keine Kräfte entstehen, die größer sind als die beschädigungsfrei ertragbaren Kräfte an der Schutzeinrichtung 11 und dem Stromabnehmer 7. Sollten doch Beschädigungen an der Schutzeinrichtung 11 auftreten, kann die Schutzeinrichtung 11 leicht ausgetauscht werden ohne dass die zu schützenden Klemme 3 ausgetauscht oder auch nur demontiert werden muss.

Die beschriebenen Ausführungsformen der Erfindung sind lediglich als beispielhaft anzusehen. Die beschriebenen Merkmale können auch anders miteinander kombiniert werden als in den beschriebenen Ausführungsformen. Maßgeblich hierfür ist lediglich der Gegenstand der Patentansprüche.

## Patentansprüche

1. Oberleitungsanordnung (13) mit wenigstens einem Fahrdraht (1), wenigstens einer am Fahrdraht (1) befestigten Klemme (3) und wenigstens einer Schutzeinrichtung (11) zum Schutz der wenigstens einen, an einem Fahrdraht (1) befestigten Klemme (3) und eines seitlich am Fahrdraht (1) entlang schleifenden Stromabnehmers (7), wobei
die Schutzeinrichtung (11) wenigstens eine Ablenkeinrichtung (12) zum Ablenken des seitlich am Fahrdraht (1) entlang schleifenden Stromabnehmers (7) aufweist,
**dadurch gekennzeichnet, dass**
die Ablenkeinrichtung (12) wenigstens einen Schutzbereich (18) zumindest teilweise umhüllt, in dem die Klemme (3) anordenbar ist, wobei der Schutzbereich (18) als Hohlraum (16) zur Aufnahme der Klemme (3) ausgebildet ist.

2. Oberleitungsanordnung (13) nach Anspruch 1,
**dadurch gekennzeichnet, dass**
die Ablenkeinrichtung (12) wenigstens eine im montierten Zustand seitlich des Fahrdrahtes (1) verlaufende Gleitfläche (14) aufweist, an welcher der Stromabnehmer (7) entlang gleiten kann.

3. Oberleitungsanordnung (13) nach Anspruch 2,
**dadurch gekennzeichnet, dass**
die Gleitfläche (14) im montierten Zustand in einem spitzen Winkel (α) zur Längsrichtung (L) des Fahrdrahts (1) verläuft.

4. Oberleitungsanordnung (13) nach einem der oben genannten Ansprüche,
**dadurch gekennzeichnet, dass**
die Ablenkeinrichtung (12) zwei Schutzkappen (15) aufweist,
die von gegenüberliegenden Seiten auf die Klemme (3) aufsetzbar ausgebildet sind.

5. Oberleitungsanordnung (13) nach einem der oben genannten Ansprüche,
**dadurch gekennzeichnet, dass**
die Ablenkeinrichtung (12) so ausgebildet ist, dass sie mit der Klemme (3) lösbar verbunden werden kann.

6. Oberleitungsanordnung (13) nach einem der oben genannten Ansprüche,
**dadurch gekennzeichnet, dass**
die Schutzeinrichtung (11) wenigstens eine Befestigungseinrichtung (17) zum Befestigen der Schutzeinrichtung (11) an dem Fahrdraht (1) aufweist.

7. Oberleitungsanordnung (13) nach Anspruch 6,
**dadurch gekennzeichnet, dass**
die Ablenkeinrichtung (12) und die Befestigungseinrichtung (17) miteinander lösbar verbunden sind.

8. Oberleitungsanordnung (13) nach einem der oben genannten Ansprüche,
**dadurch gekennzeichnet, dass**
die Ablenkeinrichtung (12) derart ausgebildet ist, dass in einem am Fahrdraht (1) montierten Zustand ein Bereich unterhalb der Höhe des Fahrdrahts (1) ausgespart ist.

9. Oberleitungsanordnung (13) nach nach einem der oben genannten Ansprüche,
**dadurch gekennzeichnet, dass**
die Klemme (3) und/oder die Schutzeinrichtung (11) so angeordnet sind, dass die Klemme (3) von der wenigstens einen Ablenkeinrichtung (12) der Schutzeinrichtung (11) zumindest teilweise umhüllt ist.

10. Oberleitungsanordnung (13) nach nach einem der oben genannten Ansprüche,
**dadurch gekennzeichnet, dass**
die Schutzeinrichtung (11) mit wenigstens einer Befestigungseinrichtung (17) am Fahrdraht (1) befestigt ist sowie
die Schutzeinrichtung (11) und die Klemme (3) zueinander mechanisch separat ausgebildet und in Längsrichtung (L) des Fahrdrahts (1) mit einem Abstand (A) zueinander angeordnet sind.

11. Verfahren zur Montage einer Oberleitungsanordnung (13), bei dem wenigstens eine Klemme (3) an einem Fahrdraht (1) befestigt wird und eine Schutzeinrichtung (11) zum Schutz der Klemme (3) und eines seitlich am Fahrdraht (1) entlang schleifenden Stromabnehmers (7) angeordnet wird, durch die der seitlich am Fahrdraht (1) entlang schleifende Stromabnehmer (7) abgelenkt wird, wobei die Schutzeinrichtung (11) die Klemme (3) zumindest teilweise umhüllt, wobei die Schutzeinrichtung (11) einen Hohlraum (16) aufweist, in dem die Klemme (3) aufgenommen wird.

## Claims

1. Overhead line arrangement (13) with at least one contact wire (1), at least one terminal (3) fastened to the contact wire (1) and at least one protection facility (11) for protecting the at least one terminal (3) fastened to a contact wire (1) and a current collector (7) looping laterally along the contact wire (1), wherein
the protection facility (11) has at least one deflection facility (12) for deflecting the current collector (7) looping laterally along the contact wire (1),
**characterised in that**
the deflection facility (12) envelops at least one protection area (18) at least partially, in which protection area the terminal (3) can be arranged, wherein the protection area (18) is embodied as a cavity (16) for receiving the terminal (3).

2. Overhead line arrangement (13) according to claim 1,
**characterised in that**
the deflection facility (12) has at least one sliding surface (14) running laterally on the contact wire (1) in the assembled state, along which sliding surface the current collector (7) can slide.

3. Overhead line arrangement (13) according to claim 2,
**characterised in that**
the sliding surface (14), in the assembled state, runs at an acute angle (α) with respect to the longitudinal direction (L) of the contact wire (1).

4. Overhead line arrangement (13) according to one of the afore-cited claims,
**characterised in that**
the deflection facility (12) has two protection caps (15), which are embodied to be placeable on the terminal (3) from opposite sides.

5. Overhead line arrangement (13) according to one of the afore-cited claims,
**characterised in that**
the deflection facility (12) is embodied so that it can be detachably connected to the terminal (3).

6. Overhead line arrangement (13) according to one of the afore-cited claims,
**characterised in that**
the protection facility (11) has at least one fastening facility (17) for fastening the protection facility (11) to the contact wire (1).

7. Overhead line arrangement (13) according to claim 6,
**characterised in that**
the deflection facility (12) and the fastening facility (17) are detachably connected to one another.

8. Overhead line arrangement (13) according to one of the afore-cited claims,
**characterised in that**
the deflection facility (12) is embodied so that a region below the height of the contact wire (1) is recessed in a state mounted on the contact wire (1).

9. Overhead line arrangement (13) according to one of the afore-cited claims,
**characterised in that**
the terminal (3) and/or the protection facility (11) are arranged so that the terminal (3) is enveloped by the at least one deflection facility (12) of the protection facility (11) at least partially.

10. Overhead line arrangement (13) according to one of the afore-cited claims,
**characterised in that**
the protection facility (11) is fastened to the contact wire (1) with at least one fastening facility (17) and the protection facility (11) and the terminal (3) are embodied mechanically separate from one another and are arranged at a distance (A) from one another in the longitudinal direction (L) of the contact wire (1).

11. Method for assembling an overhead line arrangement (13), in which at least one terminal (3) is fastened to a contact wire (1) and a protection facility (11) for protecting the terminal (3) and a current collector (7) looping laterally along the contact wire (1) is arranged, by means of which the current collector (7) looping laterally along the contact wire (1) is deflected, wherein the protection facility (11) envelops the terminal (3) least partially, wherein the protection facility (11) has a cavity (16) in which the terminal (3) is received.

## Revendications

1. Agencement (13) de ligne aérienne comprenant un fil (1) de contact, au moins une pince (3) de contact fixée au fil (1) de contact et au moins un dispositif (11) de protection pour la protection de la au moins une pince (3) fixée à un fil (1) de contact et un appareil (7) de prise de courant glissant latéralement le long du fil (1) de contact, dans lequel
le dispositif (11) de protection a au moins un dispositif (12) de déviation pour la déviation de l'appareil (7) de prise de courant glissant latéralement le long du fil (1) de contact,
**caractérisé en ce que**
le dispositif (12) de déviation enveloppe au moins en partie au moins une région (18) de protection, dans laquelle la pince (3) peut être mise, dans lequel la région (18) de protection est constituée sous la forme d'un espace (16) creux de réception de la pince (3).

2. Agencement (13) de ligne aérienne suivant la revendication 1,
**caractérisé en ce que**
le dispositif (12) de déviation a au moins une surface (14) de glissement, qui s'étend, dans l'état monté, latéralement au fil (1) de contact et le long de laquelle l'appareil (7) de prise de courant peut glisser.

3. Agencement (13) de ligne aérienne suivant la revendication 2,
**caractérisé en ce que**
la surface (14) de glissement s'étend, à l'état monté, en faisant un angle (α) aigu avec la direction (L) longitudinale du fil (1) de contact.

4. Agencement (13) de ligne aérienne suivant l'une des revendications précédentes,
**caractérisé en ce que**
le dispositif (12) de déviation a deux coiffes (15) de protection, qui sont constituées de manière à pouvoir être posées sur la pince (3) par des côtés opposés.

5. Agencement (13) de ligne aérienne suivant l'une des revendications précédentes,
**caractérisé en ce que**
le dispositif (12) de déviation est constitué de manière à pouvoir être relié de manière amovible à la pince (3).

6. Agencement (13) de ligne aérienne suivant l'une des revendications précédentes,
**caractérisé en ce que**
le dispositif (11) de protection a au moins un dispositif (17) de fixation pour la fixation du dispositif (11) de protection au fil (1) de contact.

7. Agencement (13) de ligne aérienne suivant la revendication 6,
**caractérisé en ce que**
le dispositif (12) de déviation et le dispositif (17) de fixation sont reliés l'un à l'autre de manière amovible.

8. Agencement (13) de ligne aérienne suivant l'une des revendications précédentes,
**caractérisé en ce que**
le dispositif (12) de déviation est constitué de manière à ménager, dans un état monté sur le fil (1) de contact, une région en-dessous du niveau du fil (1) de contact.

9. Agencement (13) de ligne aérienne suivant l'une des revendications précédentes,
**caractérisé en ce que**
la pince (3) et/ou le dispositif (11) de protection sont disposés de manière à ce que la pince (3) soit enveloppée au moins en partie par le au moins un dispositif (12) de déviation du dispositif (11) de protection.

10. Agencement (13) de ligne aérienne suivant l'une des revendications précédentes,
**caractérisé en ce que**
le dispositif (11) de protection est fixé au fil (1) de contact par au moins un dispositif (17) de fixation, le dispositif (11) de protection et la pince (3) étant constitués de manière séparée l'un de l'autre mécaniquement et étant montés, dans la direction (L) longitudinale du fil (1) de contact, à une distance (A) l'un de l'autre.

11. Procédé de montage d'un agencement (13) de ligne aérienne, dans lequel on fixe au moins une pince (3) à un fil (1) de contact et on monte un dispositif (11) de protection pour la protection de la pince (3) et d'un appareil (7) de prise de courant glissant latéralement le long du fil (1) de contact, dispositif de protection, par lequel on dévie l'appareil (7) de prise de courant glissant latéralement le long du fil (1) de contact, dans lequel le dispositif (11) de protection enveloppe au moins en partie la pince (3), le dispositif (11) de protection ayant un espace (16) creux, dans lequel la pince (3) est reçue.
